# EUROPEAN PATENT APPLICATION

(11) **EP 4 790 754 A1**
(43) Date of publication of application: **12.08.2026**
(21) Application number: 26157425.5
(22) Date of filing: 10.02.2026
(51) Int. Cl.: H01M 4/04, H01M 4/36, H01M 4/38, H01M 4/62

(54) **COMPOSITE NEGATIVE ELECTRODE ACTIVE MATERIAL FOR RECHARGEABLE LITHIUM BATTERY, NEGATIVE ELECTRODE SLURRY FOR MANUFACTURING RECHARGEABLE LITHIUM BATTERY, METHOD OF PREPARING THE SLURRY, AND RECHARGEABLE LITHIUM BATTERY**

(30) Priority: 10.02.2025 KR 20250016827
(71) Applicant: SAMSUNG SDI CO., LTD., Yongin-si, Gyeonggi-do 17084 (KR)
(72) Inventor: KIM, Su Ji, 16678 Gyeonggi-do (KR); KIM, Min Jun, 16678 Gyeonggi-do (KR); PARK, Kee Min, 16678 Gyeonggi-do (KR); KIM, Ye Seul, 16678 Gyeonggi-do (KR); KIM, Beom Kwon, 16678 Gyeonggi-do (KR)
(74) Representative: Michalski Hüttermann & Partner mbB

(57) **Abstract**

A composite negative electrode active material for a rechargeable lithium battery includes the silicon-based negative electrode active material and a conductive material entangled on the surface of the Si-based negative electrode active material. The silicon-based negative electrode active material includes silicon nanoparticles and amorphous carbon coating layers on the surfaces of the silicon nanoparticles. The silicon-based negative electrode active material is porous and has a sphericity of 0.9 to 1.0. The pores include mesopores, and the ratio of a mesopore volume to the total pore volume of the Si-based negative electrode active material is 30% or more and less than 70%.

## Description

### CROSS-REFERENCE TO RELATED APPLICATION

The present application claims priority and the benefit of Korean Patent Application No. 10-2025-0016827, filed on February 10, 2025, in the Korean Intellectual Property Office, the entire disclosure of which is incorporated herein by reference.

### BACKGROUND

### 1. Field of the Disclosure

The present disclosure relates to a composite negative electrode active material for a rechargeable lithium battery, a negative electrode slurry for manufacturing a rechargeable lithium battery, a method of preparing a negative electrode slurry for a rechargeable lithium battery, and a rechargeable lithium battery.

### 2. Discussion of Related Art

With the rapid spread of electronic devices that use batteries, such as cellular phones, laptop computers and electric vehicles, the demand for rechargeable batteries with high energy density and high capacity is rapidly increasing. Accordingly, research and development to improve the performance of rechargeable lithium batteries has been conducted.

A rechargeable lithium battery includes a positive electrode and a negative electrode, which contain active materials capable of intercalation and deintercalation of lithium ions, and an electrolyte. A rechargeable lithium battery generates electrical energy through oxidation and reduction reactions when lithium ions are intercalated/deintercalated into/from the positive electrode and the negative electrode.

Attempts have been made to use a silicon (Si)-based negative electrode active material as a high-capacity negative electrode active material.

### SUMMARY OF THE DISCLOSURE

The present disclosure is directed to providing a composite of a negative electrode active material for a rechargeable lithium battery, which provides a negative electrode with a low negative electrode expansion rate, low composite layer resistance, and low interface resistance.

The present disclosure is also directed to providing a composite of a negative electrode active material for a rechargeable lithium battery, which provides a negative electrode with excellent cycle life characteristics.

The present disclosure is also directed to providing a negative electrode slurry for a rechargeable lithium battery, a method of preparing a negative electrode slurry for manufacturing a rechargeable lithium battery, and a rechargeable lithium battery.

According to an aspect of the present disclosure, there is provided a composite negative electrode active material for a rechargeable lithium battery.

The composite negative electrode active material for a rechargeable lithium battery includes a silicon-based negative electrode active material and a conductive material entangled on the surface of the Si-based negative electrode active material. The Si-based negative electrode active material includes silicon nanoparticles and amorphous carbon coating layers on the surfaces of the Si nanoparticles. The Si-based negative electrode active material is porous and has a sphericity (S) of Equation 1 below, ranging from 0.9 to 1.0, the pores include mesopores, and the ratio of the volume of mesopores to the total pore volume of the Si-based negative electrode active material is 30% or more and less than 70%: $Sphericity \left(S\right) = 4 π \times {A / B}^{2}$ In Equation 1, A is the area of a Si-based negative electrode active material nanoparticle, and B is a perimeter of the Si-based negative electrode active material nanoparticle.

According to another aspect of the present disclosure, there is provided a negative electrode slurry for a rechargeable lithium battery, which includes the above-described composite negative electrode active material for a rechargeable lithium battery.

According to still another aspect of the present disclosure, there is provided a method of preparing a negative electrode slurry for a rechargeable lithium battery, which includes: preparing a first dispersion including a negative electrode active material; and mixing a second dispersion including a Si-based negative electrode active material and a conductive material with the first dispersion, wherein the Si-based negative electrode active material includes Si nanoparticles, with amorphous carbon coating layers one surfaces of the Si nanoparticles, the Si-based negative electrode active material has porous and has a sphericity (S) of Equation 1, ranging from 0.9 to 1.0, the pores include mesopores, and the ratio of the volume of mesopores to the total pore volume of the Si-based negative electrode active material is 30% or more and less than 70%.According to yet another aspect of the present disclosure, there is provided a rechargeable lithium battery that includes a negative electrode comprising a composite negative electrode active material for a rechargeable lithium battery; and a positive electrode.

In an embodiment, a negative electrode provides that has a low negative electrode expansion rate, low composite layer resistance, and low interfacial resistance such that a rechargeable lithium battery may be provided with high efficiency, high capacity, and a long lifetime.

### BRIEF DESCRIPTION OF THE DRAWINGS

Features and advantages of the present invention will become more apparent to those of ordinary skill in the art by the embodiments described below with reference to the accompanying drawings.
FIG. 1 is a conceptual diagram of a composite of a negative electrode active material for a rechargeable lithium battery according to an embodiment; and
FIGS. 2 to 5 are schematic diagrams of rechargeable lithium batteries according to embodiments.

### DETAILED DESCRIPTION OF EXEMPLARY EMBODIMENTS

Hereinafter, embodiments of the present disclosure will be described in detail. However, the embodiments are presented as examples, and the present disclosure is not limited to the disclosed embodiments.

Unless otherwise specified herein, when a part such as a layer, a film, an area, a plate, etc. is said to be "on" another part, it includes not only the case where it is "directly on" the other part, but also the case where another part is present therebetween.

Unless otherwise specified in this specification, a singular may also include a plural. In addition, unless otherwise specified, "A or B" may mean "including A," "including B," or "including A and B."

In this specification, "a combination thereof" may mean a mixture, a laminate, a composite, a copolymer, an alloy, a blend, and a reaction product of the components.

Unless otherwise defined herein, the particle size may be an average particle diameter. In addition, the particle size refers to the average particle diameter (D50), which is the diameter of particles with a cumulative volume of 50 vol% in the particle size distribution. The average particle diameter (D50) may be measured by a well-known method to those skilled in the art, for example, using a particle size analyzer, a transmission electron micrograph, or a scanning electron micrograph. As another method, the average particle size may be measured using a measurement device using dynamic light scattering, and an average particle diameter (D50) value may be obtained by performing data analysis, counting the number of particles in each particle size range, and then calculating the D50 value therefrom. Alternatively, the average particle diameter may be measured using a laser diffraction method. When measuring the average particle diameter by the laser diffraction method, more specifically, the average particle diameter (D50) may be calculated based on 50% of the particle size distribution after dispersing the target particles in a dispersion medium, introducing the particles into a commercially available laser diffraction particle size measuring device (such as MT 3000 from Microtrac), and irradiating the particles with ultrasonic waves of about 28 kHz at an output of 60 W.

A composite negative electrode active material for a rechargeable lithium battery according to one embodiment includes a Si-based negative electrode active material, which will be described below. The Si-based negative electrode active material may provide high efficiency, high capacity, and long lifetime.

The composite includes a conductive material entangled on the surface of the Si-based negative electrode active material. "Entangled" as used herein means bonding of the conductive material such that it cannot be easily separated from the surface of the Si-based negative electrode active material.

Generally, because the Si-based negative electrode active material shrinks and expands during charging and discharging of a battery, a conductive path between the Si-based negative electrode active materials may be easily broken. A negative electrode slurry may include a conductive material to maintain the conductive path.

Because the conductive material in the composite is entangled on the surface of the Si-based negative electrode active material, the conductive material can form a conductive path only for the Si-based negative electrode active material. Therefore, the fraction of the negative electrode active material may be relatively increased by reducing the amount of the conductive material in the slurry, which leads to significant improvement in capacity. In addition, as the Si-based negative electrode active material is entangled by the conductive material, during charging and discharging of the battery the Si-based negative electrode active material may be trapped by the conductive material, which thereby significantly lowers the expansion rate of the negative electrode. Also, because the Si-based negative electrode active material may be entangled by the conductive material, interfacial resistance and the composite layer resistance of the negative electrode may be significantly lowered.

### Si-based negative electrode active material

The Si-based negative electrode active material may be porous and have a sphericity (S) according to Equation 1 below ranging from 0.9 to 1.0. The Si-based negative electrode active materials includes Si nanoparticles and amorphous carbon coating layers placed on the surfaces of the Si nanoparticles. $Sphericity \left(S\right) = 4 π \times {A / B}^{2}$ In Equation 1, A is the area of the Si-based negative electrode active material and B is the perimeter of the Si-based negative electrode active material shape.

The pores in the Si-based negative electrode active material include mesopores, and the ratio of the volume of mesopores to the total pore volume of the negative electrode active material is 30% or more and less than 70%. Here, the volume ratio of the mesopores is calculated as (the volume of mesopores/total volume of pores) x 100, and in embodiments the volume ratio may be 30,31,32,33,34,35,36,37,38,39,40,41,42,43,44,45,46,47,48,49,50,51,52,53,54,55,56,5 7,58,59,60,61,62,63,64,65,66,67,68,69%, 30% or more and less than 70%, and more particularly 30% to 68%.

The total pore volume and the volume of mesopores may be quantified using a Barrett-Joyner-Halenda (BJH) analysis instrument. Here, the total pore volume includes the volume of mesopores, and the total volume of pores formed within the negative electrode active material regardless of their size. The total pore volume of the Si-based negative electrode active material may be 0.001 to 0.05 cm³/g, 0.001 to 0.01 cm³/g, or 0.005 to 0.05 cm³/g, which may be a value measured by BJH.

In some examples, the mesopores may be sized 2 to 50 nm. The size of the pore may refer to the average diameter of pores, or the length of the longest axis. In some examples, the pores may include macropores with a size of more than 50 nm. That is, when the pore size exceeds 50 nm, the pores may be classified as macropores. In some embodiments, the maximum size of the macropores may be 500 nm, but the present disclosure is not limited thereto. The macropores may be included at 1 vol% or less with respect to the total pore volume. And, in some embodiments, 0 vol% of the pores are macropores, which indicates substantially no macropores in the negative electrode active material.

The pores may include micropores with a size of more than 0 nm and less than 2 nm. The volume of the micropores included in the negative electrode active material may be a volume excluding mesopores from the total pore vol%. If macropores are also present, the volume of the micropores may correspond to the volume excluding mesopores and macropores.

The negative electrode active material according to an embodiment is spherical such that is can be well dispersed in the negative electrode, which thereby results in a decrease in expansion rate during charging and discharging of the battery. When the negative electrode active material is used in combination with crystalline carbon, the spherical negative electrode active material can be more readily introduced in-between the crystalline carbons and, thus, can be more uniformly dispersed in the negative electrode.

The negative electrode active material according to an embodiment may have a sphericity (S) of 0.9 to 1.0, expressed by Equation 1 above, and may be thereby referred to as spherical.

With respect to the sphericity, calculation of the sphericity of the negative electrode active material may be obtained by projecting a 3D particle onto a 2D plane. For example, the sphericity may be the ratio of the perimeter of the actual particle shape to the perimeter of a circle with the same area. In Equation 1 above, the area (A) is the area of a circle with the same perimeter as that of the actual particle (B), determined by obtaining a cross-sectional SEM image of an electrode using a controlled pressure scanning electron microscope (CP-SEM) and measuring B from the image using an Image J program. In some embodiments, the actual perimeter may be obtained along a particle's perimeter in the case of a perfectly spherical shape and also in the case that the particle is not perfectly spherical and has an irregular region.

The sphericity of the negative electrode active material according to an embodiment may be 0.9, 0.91, 0.92, 0.93, 0.94, 0.95, 0.96, 0.97, 0.98, 0.99, 1.0, 0.92 to 0.98, or 0.92 to 0.95. When the sphericity of the negative electrode active material is in this range, the expansion rate may be more effectively suppressed during charging and discharging.

The Si-based negative electrode active material according to embodiments may have a span value of Equation 2 below, ranging from 1.1 to 1.6. $Span = \left(D90-D10\right) / D 50$ In Equation 2, D10 refers to the size of a Si-based negative electrode active material particle with the cumulative volume of 10 vol% in the particle size distribution, D50 refers to the size of a Si-based negative electrode active material particle with a cumulative volume of 50 vol% in the particle size distribution, and D90 refers to the size of a Si-based negative electrode active material particle with the cumulative volume of 90 vol% in the particle size distribution.

In some embodiments, the span value may be .1, 1.15, 1.2, 1.25, 1.3, 1.35, 1.4, 1.45, 1.5, 1.55, 1.6,1.1 to 1.55, or 1.1 to 1.5. When the span value of the Si-based negative electrode active material is in these ranges, there is substantially no inclusion of fine powder in the Si-based negative electrode active material. Because there is almost no inclusion of fine powder, which has a size of 1 µm or less and typically atypical fine powder, the Si-based negative electrode active material may have a low specific surface area, thereby reducing side reactions with an electrolyte and increasing lifetime of the battery.

The Si-based negative electrode active material according to embodiments may have a low specific surface area, that is, a low BET (Brunauer, Emmett, Teller) specific surface area. For example, the BET specific surface area may be 0.5 to 2 m²/g, 0.5. 0.6, 0.7, 0.8, 0.9, 1.0, 1.1, 1.2, 1.3, 1.4, 1.5, 1.6, 1.7, 1.8, 1.9, 2 m²/g, 0.8 to 2 m²/g, or 0.8 to 1.5 m²/g. Such a BET specific surface area is a lower value than the specific surface area of a Si-carbon (C) composite negative electrode active material of approximately 3 m²/g.

In embodiments, the particle size of the Si nanoparticles may be 10 to 1,000 nm, and in other embodiments, the particle size of the Si nanoparticles may be 10, 20, 30, 40, 50, 60, 70, 80, 90, 100, 110, 120,130, 140, 150, 160, 170, 180, 190, 200, 210, 220, 230, 240, 250, 260, 270, 280, 290, 300, 310, 320, 330, 340, 350, 360, 370, 380, 390, 400,450, 500, 550, 600, 650, 700, 750, 800, 850, 900, 950, 1000nm, 10 to 200 nm, or 20 to 150 nm. When the particle size of the Si nanoparticles are in these ranges, excessive volume expansion occurring in charging and discharging may be inhibited, and the disconnection of a conductive path due to particle fragmentation during charging and discharging may be prevented.

In the amorphous carbon coating layer, amorphous carbon may be soft or hard carbon, meso-phase pitch carbide, calcined coke, or a combination thereof. The thickness of the amorphous carbon coating layer for each particle may be 1 nm to 2 µm, 1 nm to 500 nm, 10 nm to 300 nm, or 20 nm to 200 nm. When the thickness of the amorphous carbon coating layer is in these ranges, Silicon volume expansion during charging and discharging of battery may be inhibited.

With respect to a total of 100 wt% of the negative electrode active material in the Si-based negative electrode active material, the amount of the Si nanoparticle may be 55 to 64 wt%, or 55,56,57,58,59,60,61,62,63,64 wt%, 58 to 62 wt%. In addition, the amount of the amorphous carbon coating layer may be 36 to 45 wt%, 36,37,38,39,40,41,42,43,44,45wt%, or 38 to 42 wt%.

The Si-based negative electrode active material according to some embodiments may further include polymer layers located on the amorphous carbon coating layers of the particles. The polymer layers may include a copolymer of polyvinylalcohol and polyacrylic acid, and the copolymer may be a crosslinked copolymer in which the polyvinylalcohol and the polyacrylic acid are crosslinked. When the negative electrode active material layer further includes such a polymer layer, the volume expansion of the negative electrode active material during charging and discharging of battery may be more effectively inhibited. In addition, because the polymer layer includes the polyvinylalcohol and polyacrylic acid, during charging and discharging of battery the penetration of the electrolyte into the negative electrode active material, and particularly, the penetration of the electrolyte into the empty space such as the pores of the negative electrode active material, may be prevented. Therefore, side reactions between the negative electrode active material and the electrolyte may be more effectively inhibited.

Each of the polyvinylalcohol and the polyacrylic acid are water-based polymers. Thus, the polymer layer is formed from environmentally friendly polymers.

In some embodiments, the polymer layer may include a copolymer of the polyvinylalcohol and the polyacrylic acid, and for example, a crosslinked polymer or crosslinked copolymer in which the polyvinylalcohol and the polyacrylic acid are crosslinked. That is, the polymer of the polymer layer may be a crosslinked polymer of the polyvinylalcohol and the polyacrylic acid. When the polyvinylalcohol and the polyacrylic acid are crosslinked and included in the polymer layer, a solvent used in the preparation of the negative electrode active material layer may not be present in the polymer layer, while water and the polymer layer may be maintained.

When the Si nanoparticles and the amorphous carbon coating layer in the negative electrode active material are a Si-C composite, the amount of the polymer layer may be 0.01 to 3 parts by weight, or 1.2 to 2.1 parts by weight with respect to 100 parts by weight of the Si-C composite. When the polymer layer is included within this range, greater effects can be achieved by the formation of the polymer layer.

The mixing ratio of the polyvinylalcohol and the polyacrylic acid in the polymer layer may be 3:97 to 40:60 (weight ratio), 6:94 to 40:60 (weight ratio), or 6:94 to 20:80 (weight ratio). When the mixing ratio of the polyvinylalcohol and the polyacrylic acid is in these ranges, that is, the amount of the polyacrylic acid is greater than the amount of the polyvinylalcohol, cycle life characteristics may be further improved. The mixing ratio is based on the total 100 parts by weight of the polyvinylalcohol and the polyacrylic acid.

In an embodiment, the ratio of functional groups in the polyvinylalcohol and the polyacrylic acid included in the polymer layer may be adjusted. For example, the molar ratio of OH groups in the polyvinylalcohol and COOH groups in the polyacrylic acid may be 5:95 to 50:50, or 10:90 to 30:70. When the functional group molar ratio are in these ranges, the effects achieved by the formation of the polymer layer can be further improved, and cycle life characteristics of the battery may be further improved. The molar ratio is based on the total mole number 100 mol of the OH groups in the polyvinylalcohol and the COOH groups in the polyacrylic acid
The Si-based negative electrode active material according to an embodiment may be prepared in the following process.

Nano-scale primary Si particles are prepared by grinding micrometer-scale Si particles. The grinding process may be performed through a conventional process such as ball milling. In the grinding process, a dispersant may be used. As the dispersant, stearic acid, boron nitride (BN), MgS, polyvinylpyrrolidone (PVP), or a combination thereof may be used. An amount of the dispersant used is a so as to be suitable for the milling process of Si particles, and the present disclosure is not limited in this regard.

The primary Si particle size may be 1 nm to 1000 nm, 10 nm to 200 nm, or 20 nm to 150 nm.

The obtained mixture is dried. The drying process may be performed with a spray drying process. As such, a dry product containing Si particles with a more uniform particle size and with spherical type may be formed, and a secondary particle in which the primary particles are assembled may also be formed. When the dry product is a spherical Si particle with a uniform particle size, a subsequently formed amorphous carbon layer may be more uniformly formed on the entire surface of the dry product.

The dry product and the amorphous carbon precursor are mixed. As the amorphous carbon precursor, petroleum coke, coal coke, petroleum pitch, coal pitch, green coke, or a combination thereof may be used.

Compression molding of the obtained mixture is performed. And compression molding of the obtained product may be further performed. The compression molding may reduce pores in the negative electrode active material, thereby effectively inhibiting side reactions.

The compression molding process may be performed under a pressure sufficient for the acquired product, particularly, the negative electrode active material that is the final product, to maintain its spherical shape. For example, the compression molding process may be under a pressure of more than 0 MPa and 30 MPa or less, more than 0 MPa and 20 MPa or less, or 5 MPa to 20 MPa. The compression molding process may be performed through cold isostatic pressing (CIP). When the compression molding is performed within these pressure ranges, the spherical shape of the negative electrode active material may be maintained without generating fine powder, and pores may be suitably reduced.

Subsequently, the obtained compression molding product is carbonized. The carbonization process may be performed at 600 °C to 1,000 °C. In the carbonization process, the dispersant may be removed. In addition, the carbonization process may be performed in a N₂ atmosphere, a helium atmosphere, or a combination thereof. In the carbonization process, the amorphous carbon precursor may be converted into amorphous carbon to surround the surface of the compression molding product, resulting in amorphous carbon coating layers on the particles.

When the carbonization process is performed within the above-described temperature range, the excessive growth of the silicon (Si) particles and SiC formation may be inhibited, and the electrical conductivity of the amorphous carbon may be improved. In addition, some of the amorphous carbon is introduced into the pores formed between the primary particles and is present on the primary particle surfaces, thereby enclosing the surfaces. When the atmosphere of the carbonization process is included in the above-described conditions, Si oxidation and SiC formation may be inhibited, and the amorphous carbon may be effectively formed, thereby reducing active material resistance.

Instead of the process of mixing the dry product and the amorphous carbon precursor, a vapor-phase coating process may be performed using the dry product and an amorphous carbon precursor gas. In these cases, without performing a separate carbonization process, an amorphous carbon coating layer may be formed on the product surface. Accordingly, after the vapor-phase coating process is performed, a compression process may be performed. Conditions for the compression process are as above.

When the negative electrode active material layer further includes the polymer layer, the prepared negative electrode active material (Si-C composite) and a polymer solution are mixed, dried, and then thermally treated. The polymer solution may be prepared by mixing polyvinylalcohol and polyacrylic acid in a solvent. The solvent may be water, ethanol, or a combination thereof. Here, the mixing ratio of the Si-C composite and the polymer solution may be adjusted in the prepared negative electrode active material to provide the above-described polymer content and the above-described mixing ratio of the polyvinylalcohol and the polyacrylic acid.

Condensation between the OH group of the polyvinylalcohol and the COOH group of the polyacrylic acid occurs with the thermal treatment process. Thus, the polyvinylalcohol and the polyacrylic acid are crosslinked, i.e., forming a crosslinked polymer. The thermal treatment process may be performed at 150 °C to 200 °C. When the thermal treatment process is performed in this temperature range, the condensation reaction, that is, the crosslinking reaction, may occur to form the crosslinked polymer.

Subsequently, the thermally treated product is subjected to a classification process. The classification process may be performed using a sieve such that the span value (defined by Equation 2 above) of the negative electrode active material will be 1.1 to 1.6. For example, the classification process may be performed to obtain an active material having a particle size with a span value of the active material, obtained from D10, D50, and D90, of 1.1 to 1.6.

### Conductive material

A conductive material is not limited, and conductive materials for a negative electrode slurry for a rechargeable lithium battery that are known in the art may be used. For example, the conductive material may be carbon-based materials such as natural graphite, artificial graphite, carbon black, acetylene black, Ketjen black, carbon fibers, carbon nanofibers, and carbon nanotubes; a metallic substance containing copper, nickel, aluminum, silver, or the like, in the form of a metal powder or metal fiber; a conductive polymer such as a polyphenylene derivative; or a mixture thereof.

In an embodiment, the conductive material may be a linear conductive material. The linear conductive material may be easily entangled on the surface of the Si-based negative electrode active material, which is in the form of particles, particularly, spherical particles. Thus, the linear conductive material may not be easily separated from the Si-based negative electrode active material. Thus, the negative electrode may reduce expansion rate, composite layer resistance, and interfacial resistance.

In some embodiments, the conductive material may be a carbon-based conductive material. The carbon-based conductive material may be more tightly entangled on the Si-based negative electrode active material due to its high compatibility with the amorphous carbon coating layer formed on the surface of the Si-based negative electrode active material.

In some embodiments, the conductive material may include one or more of carbon fibers, carbon nanofibers, and carbon nanotubes. Preferably, the conductive material is carbon nanotubes. The carbon nanotubes may include one or more types of single-wall carbon nanotubes and multi-wall carbon nanotubes.

The conductive material may be directly entangled on the surface of the Si-based negative electrode active material. In other embodiments, the conductive material may be attached to the surface of the negative electrode active material using an adhesive binder. That is, the adhesive binder may increase the adhesion of the conductive material to the Si-based negative electrode active material such that the conductive material may not be easily separated from the Si-based negative electrode active material in the process of preparing a slurry and/or a process of preparing a negative electrode.

In some examples, the adhesive binder may be one or more of carboxymethylcellulose (CMC), methylcellulose, hydroxyethylcellulose, hydroxymethylcellulose, hydroxypropylcellulose, ethylcellulose, diacetylcellulose, microcrystalline cellulose, polyacrylic acid (PAA), polyacrylate, polymethacrylic acid, polymethylmethacrylate, polyacrylamide, polyvinylacetate, polymaleic acid, polyethyleneglycol, and polyimide. The binder is preferably one or more of CMC and PAA, and most preferably CMC.

The adhesive binder may be included at 5 wt% or less, for example, 0 to 3 wt%, or 0.01 to 3 wt% in the composite of a negative electrode active material for a rechargeable lithium battery. Within these ranges, the binder may provide the above-described adhesive strength and prevent an increase in the resistance of a negative electrode.

In the composite of a negative electrode active material for a rechargeable lithium battery, the Si-based negative electrode active material may be included at 85 to 99 wt%, for example, 85,86,87,88,89,90,91,92,93,94,95,96,97,98,99wt%, 90 to 99 wt%. The conductive material may be included at 1 to 15 wt%, for example, 1,2,3,4,5,6,7,8,9,10,11,12,13,14,15wt%, 1 to 10 wt%. Within these ranges, the negative electrode may have a low expansion rate, a low composite layer resistance, and a low interfacial resistance.

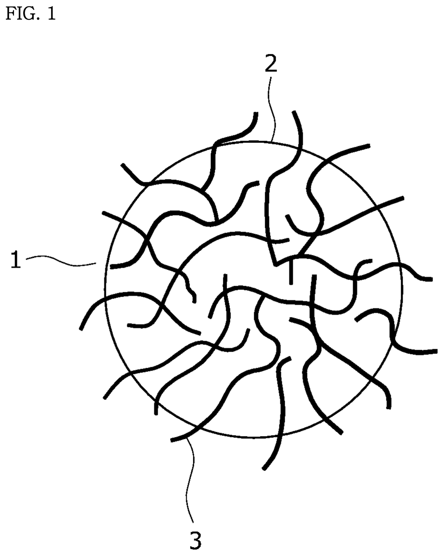

FIG. 1 is a conceptual diagram of a composite negative electrode active material for a rechargeable lithium battery according to an embodiment.

Referring to FIG. 1, the composite 1 may include a Si-based negative electrode active material 2, and a plurality of conductive materials 3 entangled on the surface of the Si-based negative electrode active material 2.

### Negative electrode slurry for rechargeable lithium battery

The negative electrode slurry for making a rechargeable lithium battery may include the composite of a negative electrode active material for a rechargeable lithium battery. The slurry may include the above-described composite material, thereby providing for a negative electrode having a low negative expansion rate, a low composite layer resistance, a low interfacial resistance, and a long lifetime.

The slurry may further include one or more of the negative electrode active materials as described herein. In some examples, the slurry may include a carbon-based negative electrode active material, a binder, a thickening agent, and a solvent.

In some embodiments, the slurry may include, based on a solid content, 0.1 to 20 wt%, 0.1, 1,2,3,4,5,6,7,8,9,10,11,12,13,14,15,16,17,18,19,20 wt%, 0.1 to 19 wt%, or 0.5 to 5 wt% of the composite of a negative electrode active material for a rechargeable lithium battery; 80 to 99 wt%, for example, 80,81,82,83,84,85,86,87,88,89,90,91,92,93,94,95,96,97,98,99 wt%, 85 to 99 wt%, or 90 to 99 wt% of the carbon-based negative electrode active material; 0.01 to 5 wt%, for example, 0.1 to 5 wt% for example 0.1, 1, 2, 3, 4, 5 wt% of a thickening agent; 0.1 to 3 wt%, for example, 0.1, 1, 2, 3 wt%, 0.3 to 2 wt% of a binder; and a certain amount of a solvent. The slurry may further include 0.01 to 5 wt%, for example, 0.01, 1, 2, 3, 4, 5 wt%, 0.1 to 5 wt% of an adhesive binder. Here, "solid content" refers to all ingredients other than the solvent.

### Method of preparing negative electrode slurry for rechargeable lithium battery

In a method of preparing the negative electrode slurry where the slurry includes a negative electrode active material other than the composite negative electrode active material, the negative electrode slurry may be easily prepared. In addition, the preparation method may include preparing a slurry containing a large quantity of the composite of negative electrode active material.

The method of preparing the negative electrode slurry for a rechargeable lithium battery includes preparing a first dispersion containing a negative electrode active material and mixing a second dispersion containing a Si-based negative electrode active material and a conductive material with the first dispersion. The Si-based negative electrode active material includes Si nanoparticles, with amorphous carbon coating layers formed on the surfaces of the Si nanoparticles. The Si-based negative electrode active material may be porous and the Si-based negative electrode active material may have a sphericity (S) calculated by Equation 1 above of 0.9 to 1.0. The pores may include mesopores, and a ratio of the volume of mesopores with respect to the total pore volume of the Si-based negative electrode active material may be 30% or more and less than 70%.The Si-based negative electrode active material and the conductive material may be substantially the same as described above with regard to the composite.

The preparation method includes mixing a second dispersion (possibly a predispersion) containing the Si-based negative electrode active material and a conductive material with the first dispersion. This is instead of simultaneously mixing a conductive material with the mixture of a negative electrode active material, for example, a carbon-based negative electrode active material, and the Si-based negative electrode active material in the first dispersion.

Accordingly, as the conductive material is included in the negative electrode slurry only to connect a conductive path of the Si-based negative electrode active material, the fraction of the Si-based negative electrode active material and the negative electrode active material in the entire negative electrode slurry may be increased, thereby further increasing the capacity of the battery. In addition, because the conductive material is entangled on the surface of the Si-based negative electrode active material, a negative electrode having low composite layer resistance and low interfacial resistance may be prepared. When the negative electrode active material is a non-Si-based negative electrode active material, for example, a carbon-based negative electrode active material, a separate conductive material may not be needed. Therefore, when the negative electrode active material in the first dispersion is a carbon-based negative electrode active material, the amount of the conductive material in the negative electrode slurry may be reduced.

Hereinafter, the preparation method will be descried in detail.

### (1) Preparation of first dispersion containing negative electrode active material

The negative electrode active material may include one or more of a carbon-based negative electrode active material and a Si-based negative electrode active material. The negative electrode active material is preferably a carbon-based negative electrode active material. The elimination of the need to add a conductive material to the carbon-based negative electrode active material in the first dispersion is advantageous in that battery capacity may be improved and in that interfacial resistance and low composite layer resistance may be reduced.

The carbon-based negative electrode active material may include one or more of natural graphite and artificial graphite.

The natural graphite may consist of large particles with a particle size of 40 µm to 120 µm. The natural graphite may include spherical particles made through a spheronization process.

The natural graphite may be one or more types of primary particles, secondary particles that are agglomerations of primary particles, and/or tertiary particles that are agglomerations of the secondary particles. The secondary particles and the tertiary particles may be spherical particles. The primary particles may have a particle size (i.e., average particle diameter (D50)) of 4 to 8 µm. In some embodiments, the primary particles may be, for example, 5 to 8 µm, 6 to 8 µm, or 6 to 7 µm. The secondary particles may have a particle size of 5 to 10 µm. The particle size of the secondary particles may be, for example, 6 to 10 µm, 6 to 8 µm, or 7 to 8 µm. The tertiary particles may have a particle size of 9 to 15 µm. For example, the particle size may be 9.2 to 15 µm, or 9.5 to 15 µm.

The natural graphite may further include an amorphous carbon coating layer on its surface.

The natural graphite may be flaky natural graphite, and in this case, lithium intercalation may more actively occur.

The artificial graphite may include flaky artificial graphite. The artificial graphite may have an average particle size (D50) of 10 µm to 20 µm, for example, 13 µm to 18 µm or 15 µm to 20 µm. Within these ranges, the specific surface area of the particles is not greatly increased, resulting in minimal side reactions with an electrolyte and no degradation of fast charging performance

The artificial graphite may have a pellet density of 1.1 to 1.7 g/cc, or 1.1 to 1.5 g/cc. Within these ranges, the internal voids of the electrode and side reactions with an electrolyte are reduced, and cycle life characteristics of the battery may be improved. "Pellet density" used herein refers to the density of powder measured by adding 1.0 g of the negative electrode active material to a mold and maintaining it under a pressure of 2.0 tons for 30 seconds.

The artificial graphite may have a tab density of 0.5 to 1.1 g/cc, or 0.5 to 0.9 g/cc. Within these ranges, the internal voids of the electrode and side reactions with an electrolyte are reduced, and cycle life characteristics may be improved. "Tab density" used herein may have a conversion factor of 0.2907 cm³/mm, and may be given as its average value obtained by performing a process of applying a pressure of 108 N three times using a GeoPyc 1360 Pycnometer (Micromeritics) into which a chamber with a diameter of 19.1 mm is inserted.

The artificial graphite may have a specific surface area of 10 m²/g or less, for example, 1 to 10 m²/g. Within these ranges, the internal voids of the electrode and side reactions with an electrolyte are reduced, and cycle life characteristics may be improved. "Specific surface area" used herein may be a BET specific surface area.

The artificial graphite may have the degree of orientation of 90 or more, for example, 90 to 100, or more than 90 and 100 or less. Within these ranges, the internal voids of the electrode and side reactions with an electrolyte are reduced, and cycle life characteristics may be improved. "Degree of orientation" used herein may refer to a ratio of the diffraction peak intensity I 002 of a (002) plane with respect to the diffraction peak intensity I 110 of a (110) plane, measured by X-ray diffraction analysis using the Cuα ray.
The shape of the artificial graphite is not limited, but it may be spherical. The artificial graphite may be one or more types of a single particle, primary particles, secondary particles that are agglomerations of primary particles, and tertiary particles that are agglomerations of secondary particles.

The negative electrode active material may be included at 50 to 99 wt%, for example, 80 to 99 wt% or 90 to 99 wt%, in the first dispersion. Within these ranges, the negative electrode active material may exhibit high dispersity.

The first dispersion may be prepared by mixing and dispersing the negative electrode active material in a solvent. The solvent may be a solvent conventionally used for a negative electrode slurry for a rechargeable lithium battery. For example, the solvent may be water, such as distilled water. The solvent may be included as the remainder, excluding the solid content, in the first dispersion.

The first dispersion may further include a thickening agent. The thickening agent may impart viscosity when a negative electrode slurry including an aqueous binder is prepared. The thickening agent may include a cellulose-based compound. As the cellulose-based compound, a mixture of one or more of CMC, hydroxypropylmethyl cellulose, methylcellulose, and an alkali metal salt thereof may be used. As the alkali metal, Na, K, or Li may be used. For example, the thickening agent may include CMC.

The thickening agent may be added once at a desired content or with multiple additions to result in the desired content, thereby preparing the first dispersion. The thickening agent may be included at 0.2 to 5 wt%, for example, 0.3 to 2 wt%, in the first dispersion. Within these ranges, an increase in battery resistance may be prevented.

The first dispersion may further include a binder. The binder may include one or more of the above-described adhesive binders, for example, one or more of PAA, polyacrylate, poylmethacrylic acid, poly methylmethacrylate, polyacrylamide, polyvinylacetate, polymaleic acid, polyethyleneglycol, and polyimide, and one or more of styrene butadiene binders.

The binder may be included at 0.1 to 10 wt%, for example, 0.1 to 5 wt%, in the first dispersion. Within these ranges, an increase in battery resistance may be prevented. In an embodiment, the PAA may be included at 0.1 to 10 wt% in the first dispersion, and the styrene butadiene rubber may be included at 0.1 to 5 wt% in the first dispersion.

In embodiments, the first dispersion may not include a conductive material.

### (2) Preparation of second dispersion containing Si-based negative electrode active material and conductive material

The Si-based negative electrode active material and the conductive material may be the same as described above. The second dispersion may be prepared by the operation of mixing the Si-based negative electrode active material and the conductive material in a solvent.

It is preferable that the solvent be substantially the same as the solvent described above. The solvent may be included as the remainder excluding the solid content in the second dispersion.

In an embodiment, the Si-based negative electrode active material may be included at 10 to 99 wt%, for example, 50 to 99 wt%, 80 to 99 wt%, or 90 to 99 wt% in the second dispersion. Within these ranges, the Si-based negative electrode active material may exhibit high dispersity in the second dispersion.

The conductive material is preferably included in the second dispersion at a lower amount than the Si-based negative electrode active material. The conductive material may be included at 0.001 to 5 wt%, for example, 0.001 to 3 wt%, 0.001 to 2.5 wt%, or 0.001 to 1 wt% in the second dispersion. Within these ranges, the composite may be prepared while minimizing the amount of a conductive material that remains unbound to the Si-based negative electrode active material.

The second dispersion may further include the thickening agent. For example, the thickening agent may be used by mixing one or more of the cellulose-based compounds, such as CMC, hydroxypropylmethyl cellulose, methylcellulose, and an alkali metal salt thereof. In particular examples, the thickening agent may include CMC. The thickening agent may be included at 0.2 to 20 wt%, for example, 1 to 20 wt% or 5 to 20 wt% in the second dispersion. Within these ranges, an increase in battery resistance may be prevented.

The second dispersion may further include the adhesive binder. The adhesive binder is the same as described above. The adhesive binder may be included in the second dispersion in an amount greater than that of the adhesive binder in the first dispersion. For example, the adhesive binder may be included at 10 wt% or less, for example, 0.1 to 6 wt% in the second dispersion.

To prepare the second dispersion, the Si-based negative electrode active material, the conductive material and/or thickening agent, and/or the adhesive binder may be added and mixed simultaneously or sequentially in the solvent.

The second dispersion may include the composite of a negative electrode active material for a rechargeable lithium battery, in which the conductive material is entangled on the surface of the Si-based negative electrode active material. In embodiments, 90 wt% or more, for example, 90 to 100 wt%, or 100 wt% of the entire conductive material in the second dispersion may be entangled on the surface of the Si-based negative electrode active material. To this end, a binder imparting adhesion may also be included in the second dispersion such that the Si-based negative electrode and the conductive material can be entangled.

### (3) Preparation of the slurry by mixing the second dispersion with the first dispersion

The slurry may be prepared by mixing and stirring the first dispersion and the second dispersion.

The slurry may further include a binder. The binder may be added after mixing the second dispersion with the first dispersion, thereby forming the slurry. The binder may include a non-aqueous binder, an aqueous binder, a dry binder, or a combination thereof.

The non-aqueous binder may be polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acryl rubber, butyl rubber, fluorine rubber, polyethylene oxide, polyvinylpyrrolidone, polyepichlorohydrine, polyphosphazene, poly(meth)acrylonitrile, an ethylenepropylene diene copolymer, polyvinylpyridine, chlorosulfonated polyethylene, latex, a polyester resin, a (meth)acrylic resin, a phenolic resin, an epoxy resin, polyvinylalcohol, and a combination thereof.

The dry binder is a fiber-forming polymer material, for example, polytetrafluoroethylene, polyvinylidene fluoride, a polyvinylidene fluoride-hexafluoropropylene copolymer, polyethyleneoxide, or a combination thereof.

The binder may be included at 0.1 to 3 wt%, for example, 0.3 to 2 wt% in the slurry.

Embodiments of the present disclosure are directed to a rechargeable lithium battery that includes a negative electrode including the composite of a negative electrode active material for a rechargeable lithium battery; and a positive electrode. Such a rechargeable lithium battery will now be described.

### Negative electrode

The negative electrode for a rechargeable lithium battery may include a current collector and a negative electrode active material layer on the current collector. The negative electrode active material layer may include a negative electrode active material. The negative electrode active material layer may further include a binder and/or a conductive material (e.g., an electrically conductive material). For example, the negative electrode active material layer may include ≥ 90 wt% to ≤ 99 wt% of the negative electrode active material, ≥ 0.5 wt% to ≤ 5 wt% of the binder, and 2: 0 wt% to ≤ 5 wt% of the conductive material.

The negative active material may be the negative active material as described herein. In a specific example, the negative active material as described herein may be included in an amount of 95 wt% or more, for example, 95 to 100 wt%, or 100 wt%, of the entire negative active material of the negative active material layer.

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be graphite such as non-shaped, sheet-shaped, flake-shaped, sphere-shaped, or fiber-shaped, natural graphite or artificial graphite. The amorphous carbon may be a soft carbon, a hard carbon, a mesophase pitch carbonization product, calcined coke, and the like.

The lithium metal alloy may include an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOx (0 < x < 2), and/or a Si-Q alloy, where Q is selected from an alkali metal, an alkaline-earth metal, a Group 13 element, a Group 14 element (excluding Si), a Group 15 element, a Group 16 element, a transition metal, a rare earth element, and a combination thereof. The Sn-based negative electrode active material may include Sn, SnO₂, a Sn-based alloy, or a combination thereof.

The silicon-carbon composite may be a composite of silicon and amorphous carbon. According to an embodiment, the silicon-carbon composite may be in a form of silicon particles with amorphous carbon coated on the surfaces of the silicon particles. For example, the silicon-carbon composite may include secondary particles (core) that are agglomerations of primary silicon particles, with amorphous carbon coating layers (shell) on the surfaces of the secondary particles. The amorphous carbon may also be between the primary silicon particles, and, for example, the primary silicon particles may be coated with the amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

The binder may serve to attach the negative electrode active material particles to each other and also to attach the negative electrode active material to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material may be used to impart conductivity (e.g., electrical conductivity) to the electrode. Any material that does not cause chemical change (e.g., does not cause an undesirable chemical change in the rechargeable lithium battery) and that conducts electrons can be used in the battery. Non-limiting examples of the conductive material include a carbon-based material such as natural graphite, artificial graphite, carbon black, acetylene black, ketjen black, a carbon fiber, a carbon nanofiber, and a carbon nanotube; a metal-based material including copper, nickel, aluminum, silver, etc. in a form of a metal powder or a metal fiber; a conductive polymer such as a polyphenylene derivative; or a mixture thereof.

The negative current collector may be a copper foil, a nickel foil, a stainless steel foil, a titanium foil, a nickel foam, a copper foam, a polymer substrate coated with a conductive metal, or a combination thereof.

### Positive electrode

A positive electrode for a rechargeable lithium battery may include a current collector and a positive electrode active material layer on the current collector. The positive electrode active material layer may include a positive electrode active material and may further include a binder and/or a conductive material. The positive electrode may further include an additive that can serve as a sacrificial positive electrode.

### Positive electrode active material

The positive electrode active material may include a compound (lithiated intercalation compound) that is capable of intercalating and deintercalating lithium. Specifically, at least one of a composite oxide of lithium and a metal selected from cobalt, manganese, nickel, and combinations thereof may be used.

The composite oxide may be a lithium transition metal composite oxide. Specific examples of the composite oxide include lithium nickel-based oxide, lithium cobalt-based oxide, lithium manganese-based oxide, lithium iron phosphate-based compound, cobalt-free nickel-manganese-based oxide, or a combination thereof. As specific examples, compounds represented by any one of the following Chemical Formulas may be used as the composite oxide: LiₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c} (0.90≤a≤1.8, 0≤b≤0.5, and 0≤c≤0.05); LiₐNi_{1-b-c}Co_{b}X_{c}O_{2-α}D_{α} (0.90≤a≤1.8, 0≤b≤0.5, 0≤c≤0.5, and 0<α<2); LiₐNi_{1-b-c}Mn_{d}X_{c}O_{2-α}D_{α} (0.90≤a≤1.8, 0≤b≤0.5, 0≤c≤0.5, and 0<α<2); LiₐNi_{b}Co_{c}L¹_{d}GₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); or LiₐFePO₄(0.90≤a≤1.8). In these Chemical Formulas, A is Ni, Co, Mn, or a combination thereof; X is Al, Ni, Co, Mn, Cr, Fe, Mg, Sr, V, a rare earth element or a combination thereof; D is O, F, S, P, or a combination thereof; G is Al, Cr, Mn, Fe, Mg, La, Ce, Sr, V, or a combination thereof; and L¹ is Mn, Al, or a combination thereof.

The positive electrode active material may be, for example, a high nickel-based positive electrode active material. In such cases, based on 100 mol% of the metal excluding lithium in the lithium transition metal composite oxide, the positive electrode active material may have a nickel content of greater than or equal to about 80 mol%, greater than or equal to about 85 mol%, greater than or equal to about 90 mol%, greater than or equal to about 91 mol%, or greater than or equal to about 94 mol% and less than or equal to about 99 mol%. The high-nickel-based positive electrode active material may be capable of realizing high capacity and can be applied to a high-capacity, high-density rechargeable lithium battery.

Based on 100 wt% of the positive electrode active material layer, an amount of the positive electrode active material may be ≥ 90 wt% to ≤ 99.5 wt% based on 100 wt% of the positive electrode active material layer. Based on 100 wt% of the positive electrode active material layer, amounts of the binder and the conductive material may be ≥ 0.5 wt% to ≤ 5 wt%, respectively.

The binder serves to attach the positive electrode active material particles to each other and also to attach the positive electrode active material to the current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be used to impart conductivity (e.g., electrical conductivity) to the electrode. Any material that does not cause an undesirable chemical change in the rechargeable lithium battery and conducts electrons may be used. Examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, etc., in a form of a metal powder or a metal fiber; a conductive polymer such as a polyphenylene derivative; or a mixture thereof.

Aluminum may be used as the current collector, but the present disclosure is not limited thereto.

### Electrolyte Solution

The electrolyte solution for a rechargeable lithium battery may include a non-aqueous organic solvent and a lithium salt.

The non-aqueous organic solvent may serve as a medium for transmitting ions taking part in the electrochemical reaction of a battery. The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include methyl acetate, ethyl acetate, n-propyl acetate, dimethyl acetate, methyl propionate, ethyl propionate, decanolide, mevalonolactone, valerolactone, caprolactone, and the like.

The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN (wherein R is a C2 to C20 linear, branched, or cyclic hydrocarbon group, a double bond, an aromatic ring, or an ether bond, and the like; amides such as dimethylformamide; dioxolanes such as 1,3-dioxolane, 1,4-dioxolane, and the like; sulfolanes, and the like.

The non-aqueous organic solvents may be used alone or in combination of two or more.

In addition, when using a carbonate-based solvent, a cyclic carbonate and a chain carbonate may be mixed and used. The cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

### Separator

Depending on the type of lithium secondary battery, a separator may be present between the positive and negative electrodes. Such separators may include polyethylene, polypropylene, polyvinylidene fluoride, or multilayer films comprising two or more layers thereof. Furthermore, mixed multilayer films, such as a polyethylene/polypropylene two-layer separator, a polyethylene/polypropylene/polyethylene three-layer separator, or a polypropylene/polyethylene/polypropylene three-layer separator, may also be used.

The separator may include a porous substrate and a coating layer comprising an organic material, an inorganic material, or a combination thereof, positioned on one or both surfaces of the porous substrate. The porous substrate may be a polymer film formed of any one polymer selected from polyolefins such as polyethylene and polypropylene, polyesters such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, cyclic olefin copolymer, polyphenylene sulfide, polyethylene naphthalate, glass fiber, TEFLON^{®}, and polytetrafluoroethylene, or a copolymer or mixture of two or more thereof. The organic material may include a polyvinylidene fluoride-based polymer or a (meth)acrylic polymer. The inorganic material may include, but is not limited to, inorganic particles selected from Al2O3, SiO2, TiO2, SnO2, CeO2, MgO, NiO, CaO, GaO, ZnO, ZrO2, Y2O3, SrTiO3, BaTiO3, Mg(OH)2, boehmite, and combinations thereof. The organic and inorganic materials may be mixed in one coating layer. In other embodiments, the organic and inorganic material may be present in a laminated form with a coating layer including an organic material and a coating layer including an inorganic material.

The rechargeable lithium battery may be cylindrical, prismatic, pouch, or coin-type batteries, and the like depending on its shape.

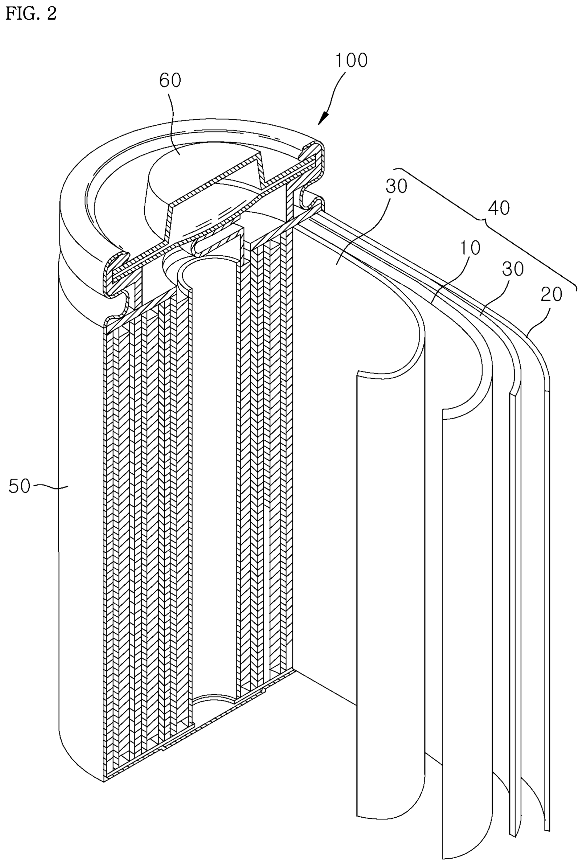

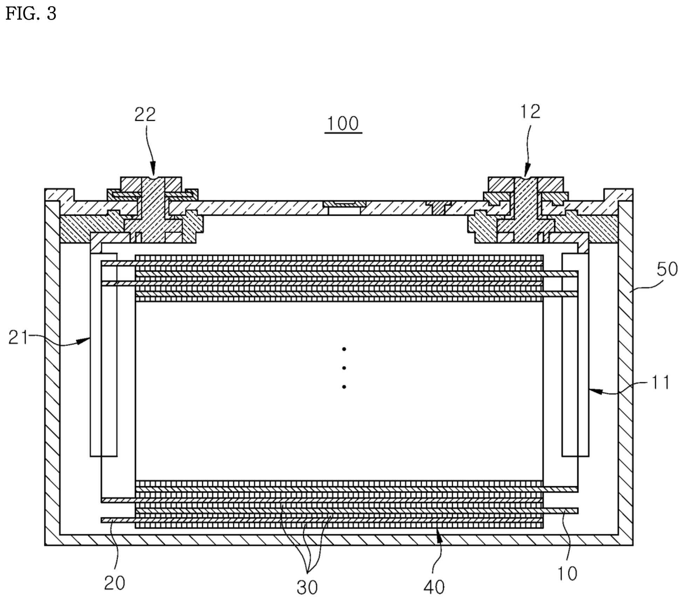

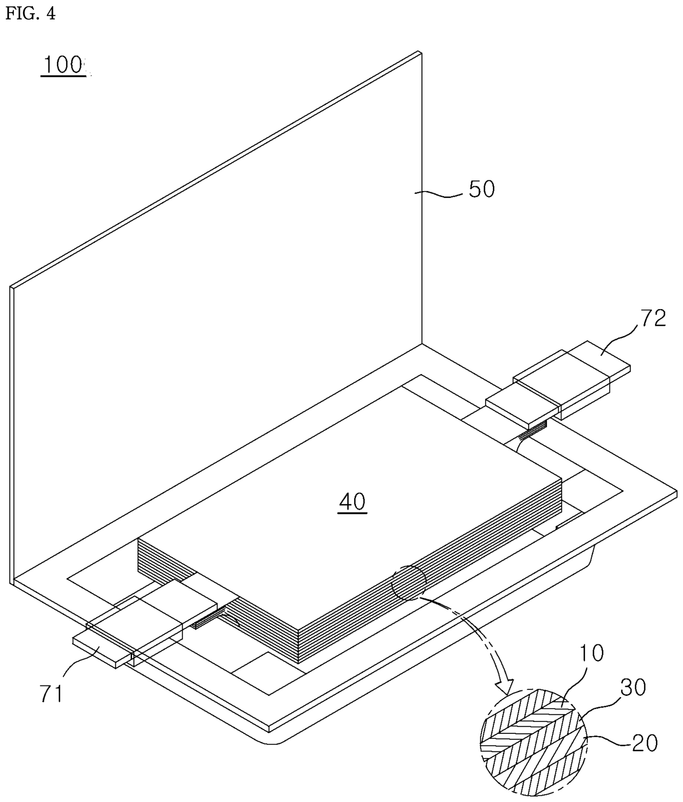

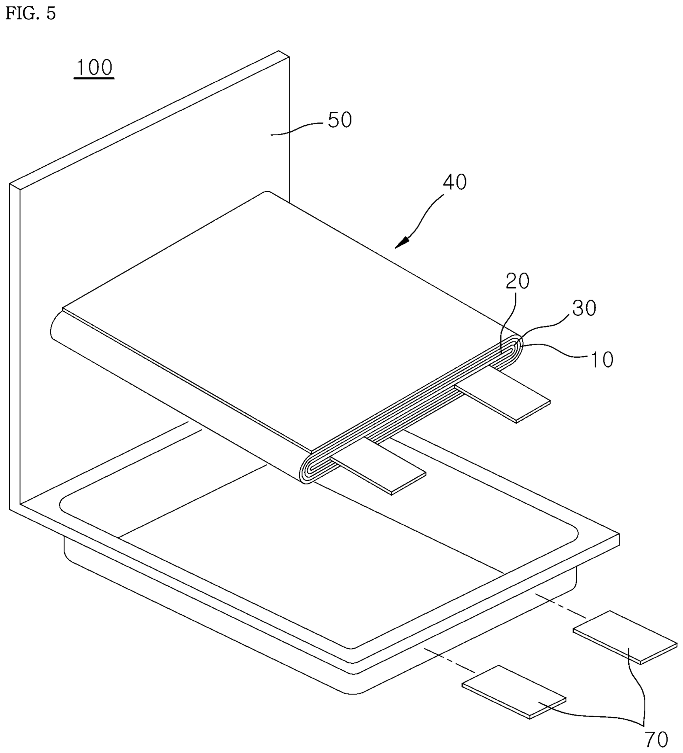

FIGS. 2 to 5 are schematic views illustrating rechargeable lithium batteries according to embodiments. FIG. 2 shows a cylindrical battery, FIG. 3 shows a prismatic battery, and FIGS. 4 and 5 show pouch-type batteries.

Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. As shown in FIG. 3, the rechargeable lithium battery 100 may include a positive lead tab 11, a positive terminal 12, a negative lead tab 21, and a negative terminal 22. As shown in FIGS. 4 and 5, the rechargeable lithium battery 100 may include an electrode tab 70, which may be, for example, a positive electrode tab 71 and a negative electrode tab 72 forming an electrical path for inducing the current formed in the electrode assembly 40 to outside of the battery.

The rechargeable lithium battery according to an embodiment may used in automobiles, mobile phones, and/or various types of electric devices. That is, the present disclosure can be applied to various types of electric devices that use batteries. But the present disclosure is not limited to any particular application.

Electric devices according to some embodiments include electric vehicles, hybrid electric vehicles (HEVs), plug-in hybrid electric vehicles (PHEVs), electric bicycles, electric scooters, electric golf carts, and other vehicles that utilize battery packs as a fuel source. Electric devices according to other embodiments include power devices including an energy storage system (ESS) that uses batteries, and devices and equipment related to the energy storage system. Electric devices according to further embodiments of include power tools such as metal-cutting electric tools, grinding tools, assembly tools, and railway power tools. Electronic devices also include any tool powered by a battery-powered motor, such as an electric drill, an electric grinder, an electric wrench, an electric screwdriver, an electric hammer, an impact drill, a concrete vibrator, and an electric planer. Electric devices according to embodiments include all applications that use batteries, such as mobile phones, tablet computers, laptop computers, wearable devices, electric toys, mobile electric toys, game consoles, ships, airplanes, spacecraft, drones, and robots.

Hereinafter, examples and a comparative example of the present disclosure will be described. However, the present disclosure is not limited to the following examples.

### (Example 1)

### Preparation of Si-based negative electrode active material

Primary particles with an average particle size (D50) of 100 nm were prepared by ball-milling Si particles with an average particle size of 8 µm. The primary particles and stearic acid were mixed in a weight ratio of 20:80, and the mixture was spray-dried to thereby prepare Si secondary particles that had an average particle size (D50) of 7 µm and pores.

The prepared Si secondary particles and petroleum pitch were mixed in a weight ratio of 60:40, and the mixture was subjected to compression molding through a cold isostatic pressing method under a pressure of 10 MPa. Subsequently, the obtained compression-molding product was carbonized in a N₂ atmosphere at a temperature of 1,000 °C.

The carbonized product was then classified using sieves so that the span value of Equation 2 above was 1.1. A negative electrode active material coated with soft carbon with a thickness of 30 nm, which was a Si-C composite including secondary particles with an average particle size (D50) of 7 µm in which primary Si particles with an average particle size (D50) of 100 nm were assembled, and a soft carbon coating layer that coated the secondary particles, were prepared. Here, with respect to the total weight of the negative electrode active material, the amount of the Si nanoparticles was 60 wt%, and the amount of the soft carbon was 40 wt%. In addition, the D10, D50, and D90 of the negative electrode active material were measured using a particle analyzer (product name: LS 13 320, manufacturer: Beckman Coulter), and the results are shown in Table 1 below.

In addition, the sphericity obtained from the cross-sectional image that was obtained through CP-SEM using the Image J program was 0.98. Further, the total pore volume and the mesopore volume of the prepared negative electrode active material were measured using a BJH analysis instrument.

BJH measurement was performed using a BJH instrument (model name: ASAP 2020, manufacturer: Micromeritics) in a method of measuring the amount of adsorption/desorption on a sample as a function of pressure by varying the pressure from 0 mmHg to 950 mmHg using nitrogen gas at the temperature of liquid nitrogen (-198 °C). The total pore volume measurement results from the BJH measurement are shown in Table 1 below. Also, a ratio of the mesopore volume with respect to the total pore volume ((mesopore volume/total pore volume) x 100) was measured and is shown in Table 2 below.

### Measurement of negative electrode slurry

A second dispersion was prepared by mixing the prepared Si-based negative electrode active material and aqueous-dispersed single-walled carbon nanotubes as a conductive material in a solvent, adding carboxymethylcellulose (CMC), and mixing distilled water with the resulting solution. In the second dispersion, the Si-based negative electrode active material was included at 88.2 wt%, the single-walled carbon nanotubes were included at 2.3 wt%, and the CMC was included at 9.1 wt%. Distilled water was included as the remainder in the second dispersion. In the second dispersion, the single-walled carbon nanotubes were entangled on the surface of the Si-based negative electrode active material.

A first dispersion was prepared by first adding CMC to graphite as a carbon-based negative electrode active material to produce a mixture and stirring the mixture. Then, additional CMC was added and the resulting mixture was stirred with distilled water. In the first dispersion, the graphite was added at 98 wt%, and the CMC was added at 1.3 wt%, while distilled water was included as the remainder.

A total of 100 parts by weight of slurry was prepared by mixing 4.5 parts by weight of the second dispersion with 80 parts by weight of the first dispersion, adding 4.4 parts by weight of distilled water, adding 1.1 parts by weight of styrene butadiene rubber as a binder, stirring the resulting mixture, and adding 10 parts by weight of distilled water.

The slurry included 2.2 wt% of the Si-based negative electrode active material composite for a rechargeable lithium battery, 1.1 wt% of the CMC, 95.7 wt% of the graphite, 1.0 wt% of the styrene butadiene rubber based on the solid content, and a predetermined amount of distilled water.

### Preparation of negative electrode

The negative electrode slurry was applied onto a copper foil, dried and roll-pressed. Thus, an electrode was prepared in which a negative electrode active material layer (thickness: 53 µm) was formed on the copper foil.

### Manufacture of cell

A half-cell was made by a conventional method using the negative electrode, a lithium metal counter electrode, and an electrolyte. A mixed solvent of ethylene carbonate and dimethyl carbonate (3:7 volume ratio) in which 1M LiPF₆ was dissolved was used as the electrolyte.

A positive electrode active material layer slurry prepared by mixing 96 wt% of LiNi_{0.88}Co_{0.11}Al_{0.01}O₂ as a positive electrode active material, 2 wt% of polyvinylidene fluoride as a binder, and 2 wt% of Ketjen black as a conductive material in N-methyl pyrrolidone as a solvent was applied to an Al foil. The coated foil was dried and roll-pressed to thereby prepare a positive electrode.

A coin-type full cell and a pouch-type full cell were made by conventional methods using the negative electrode, the positive electrode, and an electrolyte. As the electrolyte, a mixed solvent of ethylene carbonate and dimethyl carbonate (3L7 volume ratio) in which 1M LiPF₆ was dissolved was used.

### (Example 2)

A slurry and cells were prepared in the same manner as in Example 1 except that a mixture of PAA and CMC (weight ratio of CMC:PAA-based binder = 0.3:1) was used instead of CMC alone during the preparation of the second dispersion in Example 1.

### (Comparative Example 1)

A Si-based negative electrode active material was prepared in the same manner as in Example 1.

### Preparation of negative electrode slurry

Graphite as a carbon-based negative electrode active material and the prepared Si-based negative electrode active material were mixed, and CMC was added and mixed. Additional CMC was added to the obtained mixed solution, single-walled carbon nanotubes and distilled water were mixed, and then styrene butadiene rubber was mixed to thereby prepare a negative electrode slurry.

Based on the solid content the slurry included 95.7 wt% of the graphite, 1.95 wt% of the Si-based negative electrode active material, 1.3 wt% of the CMC, 0.05 wt% of the single-walled carbon nanotubes, and 1.0 wt% of the styrene butadiene rubber. The slurry also included a predetermined amount of distilled water. The total of the Si-based negative electrode active material, the CMC, and the single-walled carbon nanotubes was 3.3 wt%, which is the same as the total of the Si-based active material composite of Example 1 (2.2 wt%) and the CMC (1.1 wt%).

An electrode was prepared in the same manner as in Example 1 using the prepared slurry.

The following physical properties of the electrodes and cells prepared in Examples and Comparative Examples were evaluated. The results are shown in Table 1 below.
(1) Composite layer resistance (units: Ωcm) and interfacial resistance (units: Ωcm²) were measured after setting a current to 100 µA and a voltage to 5 V using a 46-pin multi-channel resistance tester (model: RM2610; HIOKI).
(2) A negative electrode expansion rate (units: %) was assessed by measuring a change in cell thickness during the lifetime after forming a pouch-type cell by assembling one double-sided positive electrode plate and two single-sided negative electrode plates, pressing the assembly with a 2 kg weight, and aging the assembly at 25 °C for one day and at 45 °C for 2 days. The expansion ratio was calculated from the thickness change after 20 cycles based on the thickness after first formation.

**Table 1**

| | Composite layer resistance | Interfacial resistance | Negative electrode expansion rate |
|---|---|---|---|
| Example 1 | 0.0265 | 0.0019 | 18.4 |
| Example 2 | 0.0285 | 0.0022 | 17.7 |
| Comparative Example 1 | 0.0338 | 0.0032 | 19.3 |

As shown in Table 1, compared to the slurry of Comparative Example 1, the slurry containing the composite of the Si-based negative electrode active material of Example 1 exhibited lower composite layer resistance and interfacial resistance, which results in improved resistance characteristics, and a reduced negative electrode expansion ratio.

The slurry prepared by mixing the PAA and the CMC of Example 2 showed a small decrease in composite layer resistance and interfacial resistance. But Example 2 exhibited better resistance characteristics than Comparative Example 1 and a significantly improved negative electrode swelling ratio compared to Example 1.

### (Reference Example 1)

A negative electrode active material layer slurry was prepared by mixing 97.5 wt% of a mixed negative electrode active material of the Si-based active material prepared in the same manner as in Example 1 and natural graphite, wherein the weight ratio of Si-based negative electrode active material to natural graphite was 90:10, 1.5 wt% of carboxymethyl cellulose, and 1 wt% of styrene butadiene rubber in water as a solvent.

A negative electrode was prepared by forming a negative electrode active material layer by coating a Cu foil current collector with the negative electrode active material layer slurry, drying, and roll-pressing.

A half-cell was made by a conventional method using the negative electrode, a lithium metal counter electrode, and an electrolyte. As the electrolyte, a mixed solvent of ethylene carbonate and dimethyl carbonate (3:7 volume ratio) in which 1M LiPF₆ was dissolved was used.

A positive electrode active material layer slurry prepared by mixing 96 wt% of LiNi_{0.88}Co_{0.11}Al_{0.01}O₂ as a positive electrode active material, 2 wt% of polyvinylidene fluoride as a binder, and 2 wt% of Ketjen black as a conductive material in N-methyl pyrrolidone as a solvent was applied to an Al foil current collector for coating, dried, and roll-pressed, thereby preparing a positive electrode.

A coin-type full cell and a pouch-type full cell were made by conventional methods using the negative electrode, the positive electrode, and an electrolyte. As the electrolyte, a mixed solvent of ethylene carbonate and dimethyl carbonate (3:7 volume ratio) in which 1M LiPF₆ was dissolved was used.

### (Reference Example 2)

A process was performed in the same manner as in Reference Example 1, except that a Si-based negative electrode active material with a span value of 1.5 and a sphericity of 0.95 was prepared by compression molding the prepared mixture of the secondary particles and petroleum pitch through a cold isostatic pressing method under a pressure of 30 Mpa, and a classification process was conducted to determine the span value.

### (Reference Example 3)

A process was performed in the same manner as in Reference Example 1, except that a Si-based negative electrode active material with a span value of 1.3 and a sphericity of 0.96 was prepared by compression molding the prepared mixture of the secondary particles and petroleum pitch through a cold isostatic pressing method under a pressure of 20 Mpa, and a classification process was conducted to determine the span value.

### (Reference Example 4)

A polymer solution was prepared by mixing 6 wt% of polyvinylalcohol and 94 wt% of PAA in distilled water. A molar ratio of OH groups included in the polyvinylalcohol and COOH groups included in the PAA was 10:90.

The Si-C composite prepared in Example 1 and the polymer solution were mixed, stirred, and then dried. The mixing ratio of the Si-C composite and the polymer solution was adjusted such that the Si-C composite accounted for 97.1 wt% and the polymer accounted for 2.9 wt%. The dried mixture was thermally treated at 150 °C to prepare a negative electrode active material. In the prepared negative electrode active material, the polymer content was approximately 3 parts by weight with respect to 100 parts by weight of the Si-C composite, the mixing ratio of the polyvinylalcohol and the PAA was 6:94 (parts by weight), and the molar ratio of the OH groups in the polyvinylalcohol and the COOH groups in the PAA was 10:90. The span value of the prepared Si-based negative electrode active material was 1.1, and the sphericity of the prepared Si-based negative electrode active material was 0.97.

The process was performed in the same manner as in Reference Example 1, except that the prepared Si-based negative electrode active material was used.

### (Reference Example 5)

A polymer solution was prepared by mixing 6 wt% of polyvinylalcohol and 94 wt% of PAA in distilled water. The molar ratio of the OH groups in the polyvinylalcohol and the COOH groups in the PAA was 10:90.

The Si-C composite prepared in Example 2 and the polymer solution were mixed, stirred, and then dried. The mixing ratio of the Si-C composite and the polymer solution was adjusted such that the Si-C composite accounted for 97.1 wt% and the polymer accounted for 2.9 wt%. The dried mixture was thermally treated at 150 °C to prepare a negative electrode active material. The dried mixture was thermally treated at 150 °C to prepare a negative electrode active material. In the prepared negative electrode active material, the polymer content was approximately 3 parts by weight with respect to 100 parts by weight of the Si-C composite, the mixing ratio of the polyvinylalcohol and the PAA was 6:94 (parts by weight), and the molar ratio of the OH groups in the polyvinylalcohol and the COOH groups in the PAA was 10:90. The span value of the prepared Si-based negative electrode active material was 1.5, and the sphericity of the prepared Si-based negative electrode active material was 0.95.

The process was performed in the same manner as in Reference Example 1, except that the prepared Si-based negative electrode active material was used.

### (Reference Comparative Example 1)

A process was performed in the same manner as in Reference Example 1, except that a Si-based negative electrode active material with a span value of 1.0 and a sphericity of 0.97 was prepared without performing compression molding for the prepared mixture of second particles and petroleum pitch.

### (Reference Comparative Example 2)

A process was performed in the same manner as in Reference Example 1, except that a Si-based negative electrode active material with a span value of 1.7 and a sphericity of 0.96 was prepared by performing compression molding on the prepared mixture of the secondary particles and petroleum pitch through a cold isostatic pressing method under a pressure of 35 Mpa, and a classification process was performed to determine the span value.

### (Reference Comparative Example 3)

A process was performed in the same manner as in Reference Example 1, except that a negative electrode active material with a span value of 1.1 and a sphericity of 0.85 (not a spherical form) was prepared by compression molding the prepared mixture of the secondary particles and petroleum pitch through a cold isostatic pressing method under a pressure of 150 Mpa.

### (Reference Comparative Example 4)

A process was performed in the same manner as in Reference Example 1, except that a negative electrode active material with a span value of 1.1 and a sphericity of 0.85 (not a spherical form), was prepared by compression molding the prepared mixture of the secondary particles and petroleum pitch through a cold isostatic pressing method under a pressure of 150 Mpa.

Table 2 shows the evaluation results for the Si-based negative electrode active materials prepared in the reference examples and reference comparative examples.

**Table 2**

| | Sphericity | Mesopore volume/total pore volume (%) | Specific surface area (m³/g) | BJH (cm³/g) | D10 (µm) | D50 (µm) | D90 (µm) | Span |
|---|---|---|---|---|---|---|---|---|
| Reference Example 1 | 0.98 | 68% | 0.8 | 0.007 | 4.7 | 8.2 | 13.7 | 1.1 |
| Reference Example 2 | 0.95 | 32% | 1.9 | 0.020 | 3.9 | 8.5 | 16.9 | 1.5 |
| Reference Example 3 | 0.96 | 56% | 1.4 | 0.010 | 4.1 | 7.8 | 14.1 | 1.3 |
| Reference Example 4 | 0.97 | 65% | 0.5 | 0.005 | 5.2 | 8.7 | 14.9 | 1.1 |
| Reference Example 5 | 0.95 | 30% | 1.2 | 0.015 | 4.1 | 7.9 | 15.9 | 1.5 |
| Reference Comparative Example 1 | 0.97 | 70% | 2 | 0.010 | 5.4 | 8.4 | 14.1 | 1.0 |
| Reference Comparative Example 2 | 0.96 | 25% | 2.1 | 0.008 | 2.4 | 7.6 | 15.4 | 1.7 |
| Reference Comparative Example 3 | 0.85 | 19% | 2.4 | 0.001 | 4.9 | 8.5 | 14.2 | 1.1 |
| Reference Comparative Example 4 | 0.85 | 20% | 2.6 | 0.001 | 3.8 | 8.5 | 16.5 | 1.5 |

The physical properties of the batteries made in the reference examples and reference comparative examples were evaluated as follows.

### Experimental 1: Evaluation of charge and discharge efficiency

The half-cells made according to Reference Examples 1 to 5 and Reference Comparative Examples 1 to 4 were charged and discharged once at 0.1C in the range of 0.01 V to 1.5 V to calculate the ratio of a discharging capacity with respect to the measured charging capacity. The results are shown in Table 1 as Efficiency (%).

### Experimental 2: Evaluation of cycle life characteristics

The coin-type full cells made according to Reference Examples 1 to 5 and Reference Comparative Examples 1 to 4 were charged and discharged first at 0.1C and charged and discharged once at 0.2C in a range of 2.5 V to 4.2 V and then charged and discharged 500 times at 0.1C. Charging and discharging methods and cut-off conditions were as follows:
Charging: constant current-constant voltage, 4.2 V/0.01C cut-off
Discharging: constant voltage, 2.5 V cut-off

The ratio of the discharging capacity at the 500^{th} cycle to that at the first cycle was calculated. The results are shown in Table 3 as Lifetime (%).

### Experimental 3: Evaluation of expansion characteristics

One formation cycle of charging and discharging was performed on the pouch-type full cells made according to Reference Examples 1 to 5 and Reference Comparative Examples 1 to 4 at 0.1C, and then 25 cycles of charging and discharging were performed at 1C. The ratio of the cell thickness after 25 cycles of charging and discharging to that after the formation cycle of charging and discharging was calculated.
Charging: constant current-constant voltage, 4.2 V/0.01C cut-off
Discharging: constant voltage, 2.5 V cut-off

The results are shown in Table 3 below as Expansion (%).

**Table 3**

| | Efficiency (%) | Lifetime (%) | Expansion (%) |
|---|---|---|---|
| Reference Example 1 | 90.6 | 90.5 | 14 |
| Reference Example 2 | 90.1 | 90 | 16 |
| Reference Example 3 | 90 | 90.2 | 15 |
| Reference Example 4 | 89.9 | 91.5 | 14 |
| Reference Example 5 | 89.8 | 91 | 16 |
| Reference Comparative Example 1 | 88.5 | 88 | 23 |
| Reference Comparative Example 2 | 88.9 | 85.6 | 25 |
| Reference Comparative Example 3 | 88 | 55.4 | 32 |
| Reference Comparative Example 4 | 88.1 | 51.8 | 35 |

As shown in Table 3, Reference Examples 1 to 5 including a spherical negative electrode active material in which the ratio of the mesopore volume to the total pore volume is 30% or more and less than 70% exhibit excellent efficiency, excellent cycle life characteristics and low expansion characteristics. Accordingly, the electrodes including the Si-based negative electrode active material are also expected to exhibit excellent efficiency, cycle life characteristics and expansion characteristics.

On the other hand, it can be seen that Reference Comparative Examples 1 and 2 including the negative electrode active material with a mesopore volume of 70% or 25% exhibit deteriorated cycle life characteristics and high expansion characteristics. Further, Reference Comparative Examples 3 and 4 including an aspherical negative electrode active material exhibit deteriorated efficiency, very low cycle life characteristics, and very high expansion characteristics.

Although the preferred embodiments of the present disclosure have been described above, the present disclosure is not limited thereto, and it is possible to implement various modifications within the scope of the detailed description and the accompanying drawings.

## Claims

1. A composite negative electrode active material (1) for a rechargeable lithium battery (100), the composite negative electrode active material (1) comprising:
a silicon-based negative electrode active material and
a conductive material (3) entangled on the surface of the silicon-based negative electrode active material (2),
wherein the silicon-based negative electrode active material (2) includes silicon nanoparticles and amorphous carbon coating layers on the surfaces of the silicon nanoparticles,
wherein the silicon-based negative electrode active material (2) is porous, and
wherein the silicon-based negative electrode active material (2) has a sphericity (S) of ranging from 0.9 to 1.0 when calculated as: $Sphericity \left(S\right) = 4 π \times {A / B}^{2}$ where A is an area of a silicon-based negative electrode active material (2) nanoparticle, and B is a perimeter of the silicon-based negative electrode active material (2) nanoparticle,
wherein the pores include mesopores, and
wherein a ratio of volume of mesopores to total pore volume of the silicon-based negative electrode active material (2) is 30% or more and less than 70%.

2. The composite negative electrode active material (1) of claim 1, wherein the conductive material (3) is a linear carbon-based conductive material.

3. The composite negative electrode active material (1) of claim 1 or 2, wherein the conductive material (3) comprises one or more of a carbon fiber, a carbon nanofiber, and carbon nanotubes.

4. The composite negative electrode active material (1) according to any one of claims 1 to 3, wherein an amount of the silicon-based negative electrode active material (2) is 85 to 99 wt%, and an amount of the conductive material (3) is 1 to 5 wt%.

5. The composite negative electrode active material (1) according to any one of claims 1 to 4, wherein the conductive material (3) is entangled on the surface of the silicon-based negative electrode active material (2) by an adhesive binder.

6. The composite negative electrode active material (1) of claim 5, wherein an amount of the adhesive binder is more than 0 wt% and 5 wt% or less.

7. The composite negative electrode active material (1) of claim 5 or 6, wherein the adhesive binder is one or more of carboxymethylcellulose (CMC), methylcellulose, hydroxyethylcellulose, hydroxymethylcellulose, hydroxypropylcellulose, ethylcellulose, diacetylcellulose, microcrystalline cellulose, polyacrylic acid (PAA), polyacrylate, poylmethacrylic acid, poly methylmethacrylate, polyacrylamide, polyvinylacetate, polymaleic acid, polyethyleneglycol, and polyimide.

8. A negative electrode slurry for a rechargeable lithium battery (100), the slurry comprising the composite negative electrode active material (1) for a rechargeable lithium battery (100) according to any one of claims 1 to 7.

9. A method of preparing a negative electrode slurry for a rechargeable lithium battery (100), the method comprising:
preparing a first dispersion including a negative electrode active material; and
mixing a second dispersion including a silicon-based negative electrode active material (2) and a conductive material (3) with the first dispersion,
wherein the silicon-based negative electrode active material (2) comprises silicon nanoparticles, with amorphous carbon coating layers on surfaces of the silicon nanoparticles,
wherein the silicon-based negative electrode active material (2) is porous,
wherein the silicon-based negative electrode active material (2) has a sphericity (S) of 0.9 to 1.0 when calculated as: $Sphericity \left(S\right) = 4 π \times {A / B}^{2}$ where A is an area of a silicon-based negative electrode active material (2) nanoparticle, and B is a perimeter of the silicon-based negative electrode active material (2) nanoparticle,
wherein the pores include mesopores, and
wherein a ratio of volume of mesopores with respect to total pore volume of the silicon-based negative electrode active material (2) is 30% or more and less than 70%.

10. The method of claim 9, wherein the negative electrode active material in the first dispersion is a carbon-based negative electrode active material.

11. The method of claim 9 or 10, wherein, in the second dispersion, an amount of the Si-based negative electrode active material is 10 to 99 wt%, and an amount of the conductive material (3) is 0.001 to 5 wt%.

12. The method according to any one of claims 9 to 11, wherein the second dispersion further comprises an adhesive binder.

13. The method according to any one of claims 9 to 12, wherein the second dispersion comprises a composite negative electrode active material (1) for a rechargeable lithium battery (100) in which a conductive material (3) is entangled on the surface of the silicon-based negative electrode active material (2).

14. The method according to any one of claims 9 to 13, wherein 90 wt% or more of the conductive material (3) in the second dispersion is entangled on the surface of the silicon-based negative electrode active material (2).

15. A rechargeable lithium battery (100) comprising:
a negative electrode (20) comprising the composite of a negative electrode active material for a rechargeable lithium battery (100) according to any one of claims 1 to 8; and
a positive electrode (10).
